# EUROPEAN PATENT SPECIFICATION

(11) **EP 3 547 051 B1**
(45) Date of publication and mention of the grant of the patent: **01.07.2020**
(21) Application number: 18163988.1
(22) Date of filing: 26.03.2018
(51) Int. Cl.: G05B 19/418, H04L 29/08

(54) **CONVEYOR SYSTEM CONTROLLER, CONVEYOR SYSTEM AND METHOD OF DATA SYNCHRONISATION**
FÖRDERSYSTEMSTEUERGERÄT, FÖRDERSYSTEM UND VERFAHREN ZUR DATENSYNCHRONISATION
ORGANE DE COMMANDE DE SYSTÈME DE TRANSPORT, SYSTÈME DE TRANSPORT ET PROCÉDÉ DE SYNCHRONISATION DE DONNÉES

(43) Date of publication of application: 02.10.2019
(73) Proprietor: EWAB Engineering AB, 592 91 Vadstena (SE)
(72) Inventor: Georg, Ingo, 34346 Hann. Münden (DE); Lundin, Roland, 592 42 Vadstena (SE)
(74) Representative: AWA Sweden AB

(56) References cited:
- EP-A2- 2 477 309
- US-B1- 6 701 214

## Description

### Technical field

The present document relates to a conveyor system controller, a conveyor system, and a method of data synchronisation between a plurality of conveyor system controllers of a conveyor system.

The conveyor system controller is suitable for use in a conveyor system for providing an autonomous production system, i.e. a system wherein work pieces are transported between operation stations without human intervention and without any central controller.

### Background

A conveyor system is a system that moves material, such as work pieces, from one location to another, typically within the same premises. Since conveyor systems are known for quick and efficient transportation for a wide variety of materials, they are widely used in many industries, such as mining, automotive, agricultural, computer, electronic, food processing, material handling, pharmaceutical, chemical, bottling and canning, print finishing and packaging.

One such conveyor system is known from US6701214B1.

A conveyor system normally comprises a plurality of work stations for performing certain operations related to the work pieces, and/or a plurality of conveyor system controllers.

EP3214024 discloses such a conveyor system comprising a plurality of work piece carriers, each presenting a machine readable and writable tag and being adapted for supporting at least one work piece during transportation. The system further comprises distribution highway conveyors each in the form of an endless conveyor adapted for transporting and circulating said work piece carriers, flow balancing conveyors and operation unit conveyors. Control of the system is achieved by autonomous switch control devices arranged at each intersection between conveyors to control the flow of the work piece carriers at the respective intersection.

Such a conveyer system is autonomous in the sense that each work stations and conveyor system controller can automatically perform certain tasks without communicating with a central controller of the conveyer system.

However, during operation of the conveyer system and/or upon certain events happened during operation, such as a stoppage, it is desirable that the detected event can be informed to the other units in the system, such as other work stations and other conveyor system controllers, such that the other units of the system can be prepared for handling the detected even. For example, if other work stations are informed that a stoppage happened in one work station, they may stop sending additional work pieces to the stopped station, such that building queues of work pieces at the stopped station can be avoid. Consequently, a need for rebalancing the capacities of the working stations in the system due to the stoppage, which normally involves a center controller and a significant amount of labour, would be avoided, such that the efficiency and robustness of the conveyer system can be improved.

Moreover, it is desirable to be able to reconfigure controllers through a robust procedure.

Hence, there is a need for a conveyor system controller which can improve the efficiency and robustness of the conveyer system with reduced human intervention.

### Summary

It is an object of the present disclosure, to provide an improved conveyor system controller, and in particular a controller which can improve the efficiency and robustness of a conveyer system with reduced human intervention.

The invention is defined by the appended independent claims, with embodiments are set forth in the appended dependent claims and in the following description and drawings.

According to a first aspect, there is provided a conveyor system controller, comprising a data storage unit configured to store a plurality of data entries, each data entry comprising a data entry ID, a data entry version identifier, and a data payload representing operating information of the controller or another controller. The controller further comprises a processing unit and a first interface for communicating with said another controller. The controller is configured to transmit a first heartbeat data packet comprising data entry ID and data entry version identifier of a data entry in the data storage unit, via the first interface, to other controllers. The controller is configured to receive a second heartbeat data packet transmitted by said another controller, via the first interface, the second heartbeat data packet comprising data entry ID and data entry version identifier of a data entry of said another controller. The controller is configured to compare the received data entry version identifier of the second heartbeat data packet, with a data entry version identifier of a corresponding data entry in the data storage unit having a same data entry ID as the second heartbeat data packet. When the controller determines that the data entry stored in its storage unit is newer than the corresponding data entry in the other controller, the controller is configured to transmit to the other controller a first synchronizing data packet comprising the data entry ID, the data entry version identifier, and at least a portion of the data payload, of the corresponding data entry in the data storage unit. A size of the first synchronizing data packet is greater than a size of the first heartbeat data packet.

The first data packet may consist essentially of the data entry ID and data entry version identifier of the data entry in the data storage unit.

By comprising only the data entry ID and the corresponding data entry version identifier of one or a plurality of data entries, the first data packet may be used for broadcasting the data entry version identifier for the data entry with only a small amount of data.

When one controller is to trigger the synchronization of other controllers, the transmitted first synchronization data packet may have a larger size by comprising additional data for synchronization, such as a portion of a data payload.

An advantage of controlling the contents and/or sizes of the transmitted data packets is that as only the controller to trigger the synchronization may transmit a data packet with a larger size, while all other data packets have a relatively small size, such that even if the system comprises a large number of controllers, i.e. a large number of data packets communicated between the controllers in the same time, a standardized serial bus, e.g., a CAN bus, can handle the communication of data packets between the controllers.

Moreover, the flexibility of the method and the conveyor system controller of the present disclosure are improved such that they can be used in a conveyor system comprising even a large number of controllers without any modification which otherwise is necessary for handling issues caused by a large number or a large size of the transmitted and/or received data packets.

It is also advantageous as when a new controller needs to be installed in a system comprising a plurality of the present conveyor system controller, or an existing controller needs to be reconfigured, the controller may be automatically synchronized to the other controllers by the synchronization triggered by those controllers having "newer" data entries. Thus, the installation of a new controller in the system and the reconfiguration of an existing controller may be facilitated.

It is also advantageous as one controller may work as a temporary "master" controller for triggering the synchronization of other controllers, and the other controllers may work as a "slave" controller for synchronizing upon the "master" controller. Thus, a data synchronization can be achieved between a plurality of controllers in the system, without a central master or any human intervention.

Since each controller may perform as the "master" controller to trigger synchronization of other controllers, a floating master conveyor system is achieved.

The conveyor system controller is further configured to receive a second synchronizing data packet comprising a second data entry ID, a second data entry version identifier, and at least a portion of a second data payload, of a second data entry in the other controller's data storage unit. A size of the second synchronizing data packet is greater than a size of the second data packet. When the second data entry version identifier of the second synchronizing data packet is indicated as newer than a data entry version identifier of a corresponding data entry in the data storage unit, the controller is configured to update the data payload and the data entry version identifier of the corresponding data entry in the data storage unit, according to the portion of the second data payload and the second data entry version identifier of the second synchronizing data packet.

The conveyor system controller may be configured to determine that the data entry stored in its storage unit is newer than the corresponding data entry in said another controller based on a change in its data payload and/or a change in its data version identifier.

The conveyor system controller may be configured to determine that the data entry stored in its storage unit is newer than the corresponding data entry in said another controller based on that the data entry version identifier of the second heartbeat data packet is indicated as older than the data entry version identifier of the corresponding data entry in the data storage unit.

The conveyor system controller may be configured such that the first synchronization data packet comprises a portion of the data payload, said portion being a subset of the data payload of that data entry, and wherein the first synchronization data packet further comprises an indication of total data payload size for the data entry and/or a data payload portion order indicator.

In this case, the controller may be configured to merge data payloads from two or more synchronization packets. Such merger may be performed based on the data payload size and data payload portion order indicators.

Moreover, in this case, the controller may be configured to update a data entry version identifier only after at least two, preferably all, synchronization packets have been received in respect of a data entry.

The conveyor system controller may be configured to transmit the first heartbeat data packet only for data entries that meet a predetermined criterion, such as a data entry ID or a data entry ID range.

The conveyor system controller may be configured to receive said heartbeat second data packet only if the data entry ID of the second heartbeat data packet meets a predetermined criterion, such as a data entry ID or data entry ID range.

The conveyor system controller further comprises a second interface for communicating with an external unit.

The conveyor system controller be further configured to receive a first signal from the external unit, via the second interface, for updating a data payload of a data entry in the data storage unit; and/or provide a second signal to the external unit, via the second interface, for controlling the external unit.

The conveyor system controller when the first signal is received, be configured to update the data payload of the data entry in the data storage unit according to the first signal; and update the data entry version identifier of the updated data entry to indicate a newer version.

The external unit may comprise an actuator, a sensor, a tag writer, a tag reader, camera, photo eyes, push button, keyboard, cell phone, smart device, scanner, or the like.

The data entry version identifier may comprise a counter or a time stamp.

The operating information may comprise an operating mode, such as a controller configuration, and/or an operating status, such as a sensor state or an error state.

The first interface may comprise a wireless interface or a wired interface, such as, but not limited to, a serial interface using a protocol selected from a group consisting of CAN, Ethernet, PROFIBUS, ProfiNET, I2C, SPI, and RS-485.

The second interface may be a single interface or two or more separate interfaces.

The data entry version identifier of the updated data entry may be updated by performing an arithmetic operation on a value of the counter, the arithmetic operation comprising adding and/or subtracting a predetermined number to and/or from the value of the counter, preferably, the predetermined number is 1.

The operating information may comprise an operating mode and/or an operating status.

According to a second aspect, there is provided a method of data synchronization between a plurality of conveyor system controllers forming part of a conveyor system, wherein each conveyor system controller comprises a data storage unit configured to store a plurality of data entries, each data entry comprising a data entry ID, a data entry version identifier, and a data payload representing operating information of the controller or another controller; a processing unit; and a first interface for communicating with said another controller.

The method comprises, in each controller transmitting a first heartbeat data packet comprising data entry ID and data entry version identifier of a data entry in the data storage unit, via the first interface, to other controllers; receiving a second heartbeat data packet transmitted by said another controller, via the first interface, the second data packet comprising data entry ID and data entry version identifier of a data entry of said another controller; and comparing the received data entry version identifier of the second heartbeat data packet, with a data entry version identifier of a corresponding data entry in the data storage unit having a same data entry ID as the second heartbeat data packet. When the controller determines that the data entry stored in its storage unit is newer than the corresponding data entry in the other controller, the method comprises transmitting to the other controller a first synchronizing data packet comprising the data entry ID, the data entry version identifier, and at least a portion of the data payload, of the corresponding data entry in the data storage unit. A size of the first synchronizing data packet is greater than a size of the first heartbeat data packet.

The first and second heartbeat data packets may consist essentially of the respective data entry ID and data entry version identifier.

The method may further comprise receiving a second synchronizing data packet comprising a second data entry ID, a second data entry version identifier, and at least a portion of a second data payload, of a second data entry in the other controller's data storage unit, wherein a size of the second synchronizing data packet is greater than a size of the second data packet, and when the second data entry version identifier of the second synchronizing data packet is indicated as newer than a data entry version identifier of a corresponding data entry in the data storage unit, the method further comprises updating the data payload and the data entry version identifier of the corresponding data entry in the data storage unit, according to the portion of the second data payload and the second data entry version identifier of the second synchronizing data packet.

The method can be performed by conveyor system controllers and systems comprising two or more such conveyor system controllers, as described by way of introduction.

### Brief Description of the Drawings

Fig. 1 is a schematic diagram of a conveyor system according to the present disclosure.
Fig. 2 is a schematic diagram of a conveyor system controller according to the present disclosure.
Fig. 3 is a first example of data entries stored in a data storage unit of a conveyor system controller according to the present disclosure.
Figs 4a-4c is a second example of data entries stored in a data storage unit of a conveyor system controller according to the present disclosure.
Fig. 5 is a method flowchart according to the present disclosure.

### Description of Embodiments

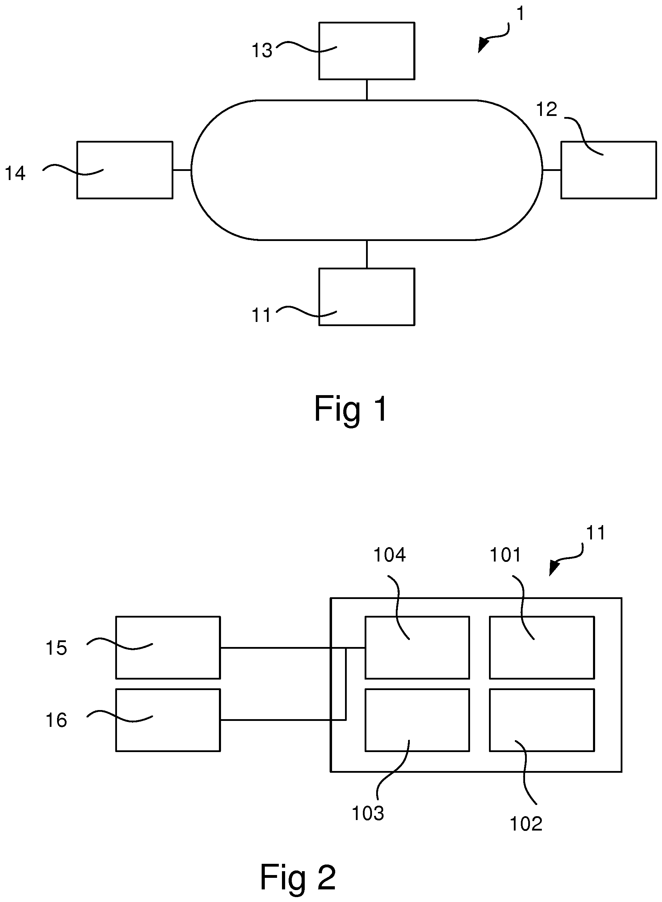

Fig. 1 illustrates a schematic diagram of a conveyor control system 1 according to the present disclosure. The system 1 may comprise a plurality of conveyor system controllers. For example, the system 1 in fig. 1 comprises four conveyor system controllers 11, 12, 13, 14.

The system 1 may comprise devices other than the controllers (not shown), such as work stations for performing certain tasks, or HMI devices for receiving instructions from an operator and/or for providing feedback to the operator. The controllers may be associated with respective devices for performing certain tasks, such as conveyor flow control devices (turnout devices, stop devices), loading or unloading devices, tag readers and/or writers, or machines for performing work on the work pieces. The controller 11, 12, 13, 14 may be a device for controlling and/or monitoring one or more work stations of the system.

As shown in fig. 2, each controller 11, 12, 13, 14 may comprise a data storage unit 101, a processing unit 102 and a first interface 103.

The data storage unit 101 can be any type of device or medium which is adapted for recording data or information in it. Data stored in the data storage unit can be read out. Any new data can be written in the data storage unit. Examples of such data storage units may be volatile or non-volatile memory devices, including but not limited to a CD-RW disk, a hard drive and a flash memory.

The processing unit 102 can be any type of device which is adapted for carrying out instructions by performing basic arithmetic, logical, control and input/output operations specified by the instructions. The processing unit may be a CPU, MCU, DSP, PLC or a single integrated circuit.

The first interface 103 may be used for communicating with one or more other controllers. The controller may transmit a first data packet to another controller or a plurality of other controllers in the system, via the first interface 103. The controller may receive a second data packet transmitted by one of the other controllers, via the first interface 103.

The first interface 103 may comprise a wireless interface. The second interface may comprise a wired interface. Consequently, the communication between one controller and the other controllers may be wired and/or wireless. The wired interface may be a serial interface comprising a protocol selected from CAN, Ethernet, PROFIBUS, I2C, SPI, or RS-485.

As shown in fig. 2, each controller 11, 12, 13, 14 may comprise a second interface 104 for communicating with an external unit. In fig, 2, the second interface 104 communicates with two external units 15 and 16.

The second interface may be a single interface, or two or more separate interfaces.

The external unit 15, 16 may be an actuator, a sensor, a tag writer, a tag reader, camera, photo eyes, push button, keyboard, cell phone, smart device, scanner, or the like.

The controller 11, 12, 13, 14 may thus receive a first signal from the external unit 15, 16, via the second interface 104. Receipt of such a signal may cause the processing unit to update a data payload of a data entry in the data storage unit 101.

For example, on receipt of a signal indicating arrival of a work piece carrier to a stop control device, the processor may update a corresponding data entry to indicate that a work piece carrier is present at the portion of the conveyor system that is associated with the controller.

The controller may provide a second signal, such as an instruction for controlling the external unit for performing a task, to the external unit, via the second interface 104.

For example, the controller may provide a signal to the external unit for causing the actuator to engage or disengage to stop or release a work piece carrier arriving to or being present at the portion of the conveyor system that is associated with the controller.

The second interface 104 may comprise a wireless interface. Alternatively, the second interface may comprise a wired interface, such as a serial interface. Consequently, the communication between the controller and the external unit via the second interface may be wired or wireless.

The present disclosure is particularly applicable to controllers 11, 12, 13, 14, which are configured to transmit information via a common communication network. The controllers 11, 12, 13, 14 may be configured to communicate in such a manner as to allow all controllers to receive all information that is communicated via the common communication network.

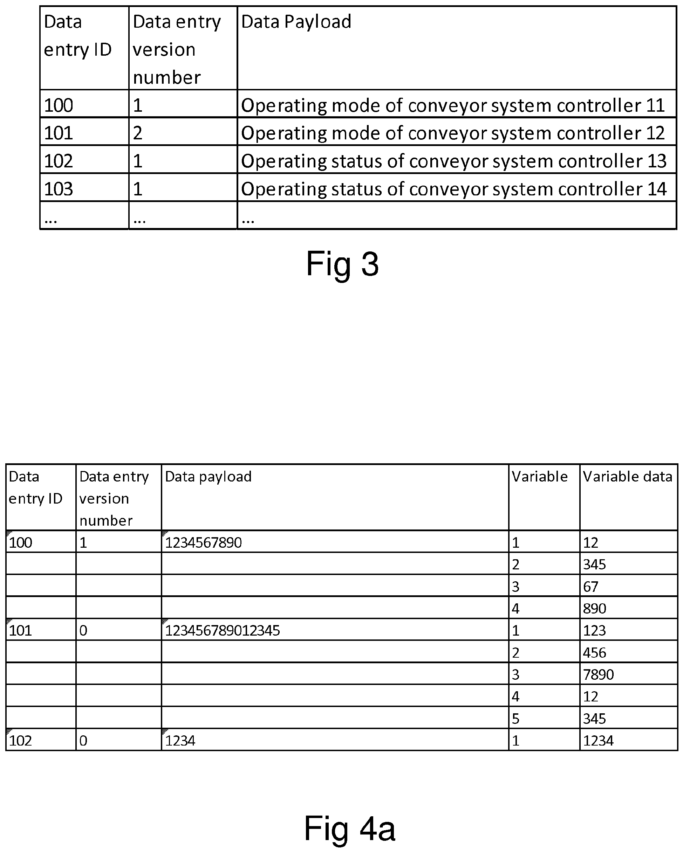

In the data storage unit 101, a plurality of data entries are stored. Fig. 3 is an example of data entries stored in a data storage unit 101 of a conveyor system controller 11, 12, 13, 14.

Each data entry may comprise a data entry ID, a data entry version identifier, and a data payload.

The data entry ID of each data entry may be unique, as shown in figs 3 and 4a-4c. Thus, the unique data entry ID may be used to distinguish one data entry from other data entries.

The data payload may represent operating information of one controller. The operating information may comprise an operating mode and/or an operating status of the controller.

The operating mode may comprise operating configuration information, e.g., information of which function this or another conveyor system controller is to perform.

The operating status may comprise information of the actual status of the controller, such as, it is in full capacity or it is malfunctioning. The operating status may indicate, as non-limiting examples, information detected by a sensor, such as the presence of a work piece carrier near the sensor; data read from a tag on the work piece or work piece carrier; a position of a stop actuator or of a turnout device arm, etc.

The data entry version identifier may indicate a version of the data entry. Thus, it may be used for representing whether the data entry is a newer or older when comparing with a corresponding data entry of e.g. another controller.

The data entry version identifier may be a counter, as shown in figs 3 and 4a-4c. When the data entry is updated, e.g. with an updated data payload, the counter may be updated by performing an arithmetic operation on a value of the counter. The value of the counter may be initially set as "0" for all data entries. For every update in one data entry, its data entry version identifier, i.e. the counter, may be increased by a predetermined value. The predetermined value may be "1". Alternatively, other arithmetic operation, such as subtraction may also be performed on the value of the counter.

The data entry version identifier may be a time stamp. The time stamp may be initially set as "0" for all data entries when the system starts. For each update in the data entry after the system starts, a time stamp may be accorded as its data entry version identifier. The accorded time stamp may be a time interval calculated from when the system started until when the update happened.

If a real time system is used, each controller in the system may be synchronized by, e.g. a global clock signal for the system, an external common time server, or an external GPS signal, which would inevitably increase the complexity of the whole system. Moreover, the system may comprise additionally a central controller for synchronizing all the controllers in real time. Thus, using the data entry version identifier may simplify the conveyor system.

Further, if a real time system is used, a minor miss-synchronization between two controllers may cause an error in the chronological order of the data entries such that the system is unable to function as desired. However, by using the time stamp instead of the real time, such a correct chronological order can be guaranteed by simply setting the time stamp to the initial value "0" when the system starts. Thus, using the data entry version identifier may improve the robustness of the conveyor system.

Each conveyor system controller may store an entire data set comprising all the data entries of all the conveyor system controllers in the system. Alternatively, each conveyor system controller may store only a portion of the entire data set. For example, each conveyor system controller may store only the data entries of some conveyor system controllers in the system which are relevant to itself. In particular, a certain group of conveyor system controllers may be configured such that each conveyor system controller stores complete information on the conveyor system controllers forming part of that group.

Figs 4a-4c is a second example of data entries stored in a data storage unit of a conveyor system controller.

In fig. 4a, it has been illustrated how each data entry may be devised to represent one or more variables of operating information as described above. In this example, the first data entry, data entry ID 100, which has a length of 10 positions, may represent four different variables. Hence, the data structure is defined such that the first two positions of the data payload represents variable 1; the next three positions represent variable 2; the next two positions represent variable 3 and the final three positions represent variable 4. This data structure definition is known by all controllers that need to be able to handle this data entry.

In a similar manner, the second data entry 101 may have a length of 15 positions, and be defined to represent five different variables and the third data entry 102 may have a data payload of four positions and represent a single variable.

A heartbeat data package would then have the form:

| | |
|---|---|
| 100 | 1, |

Where "100" represents the data entry ID and "1" represents the data entry version identifier.

A data synchronization packet may be defined such that the entire data payload of the data entry may be transmitted in one synchronisation data packet. Such a data synchronization packet only needs to contain the data entry ID, the data entry version identifier and the data payload.

Hence, a synchronization data packet based on fig. 4a may take the following form:

| | | |
|---|---|---|
| 100 | 1 | 1234567890. |

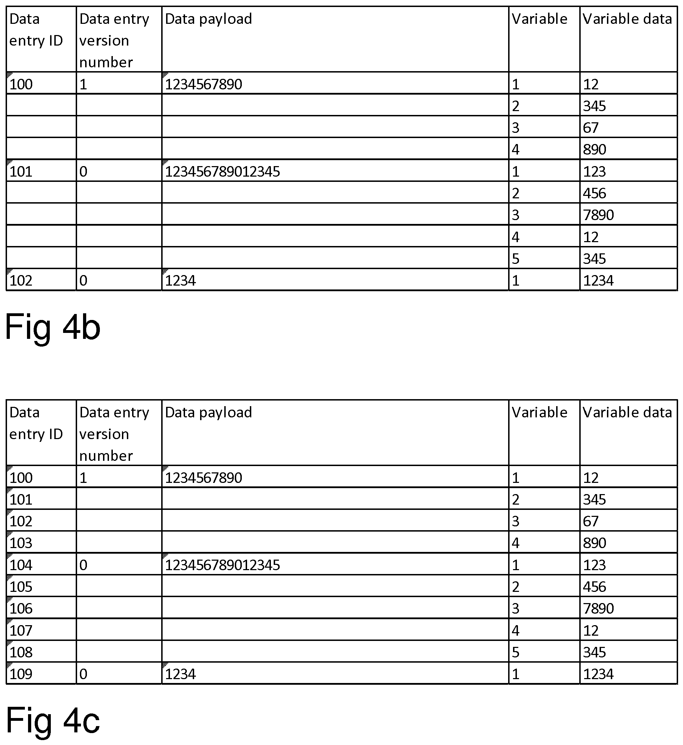

In fig. 4b, there is illustrated a data structure for the transmission of a data synchronisation packet in a situation where the data payload length that is being transmitted is limited to four positions. That is, the data payload length is smaller than the total data payload associated with the particular data entry. Hence, the data entry is divided into three messages. In such case, it is necessary to provide information that will allow the receiving controller to correctly patch together the entire data payload of the data entry based on two or more packets containing part of the data payload.

In fig. 4b. an indication of data payload size and a flag, indicating which part of the data payload is being transmitted, have been provided. Hence, the receiving controller will, based on knowledge that a maximum data payload size is four, be able to determine in which order the data payloads from the packets should be patched together. Hence, the data synchronization packets may take on the following form:

| | | | | |
|---|---|---|---|---|
| 100 | 1 | 15 | 1 | 1234, |
| 100 | 1 | 15 | 2 | 5678, |
| 100 | 1 | 15 | 3 | 90. |

As one alternative, the payload size for each data entry may be known by all the controllers, in which case only the flag is needed.

It is noted that in the example above, the payload flag forms a separate data field or a predetermined position in the data entry.

As one alternative, the payload flag may be included in one of the other data fields, such as in the data entry ID field. For example, the synchronization data packets for the first data entry 100 as per the example above may be:

| | | | |
|---|---|---|---|
| 1001 | 1 | 15 | 1234, |
| 1002 | 1 | 15 | 5678, |
| 1003 | 1 | 15 | 90. |

That is, the data field indicating the data entry ID may be expanded to indicate what part of this data entry is enclosed in the data packet.

Referring to fig. 4c, as yet another alternative, the payload flag may be entirely dispensed with by determining that a certain range of data entry IDs together form one data entry, such that each synchronisation data package having an ID within that range can be identified as belonging to that data entry, whereby the receiving controller will merge the data payloads of synchronization data packets having a data entry ID in said range. In this case, the corresponding data packets for the first data entry 100 may be

| | | | |
|---|---|---|---|
| 100 | 1 | 15 | 1234, |
| 101 | 1 | 15 | 5678, |
| 102 | 1 | 15 | 90. |

Also in this example, the data payload size may be omitted.

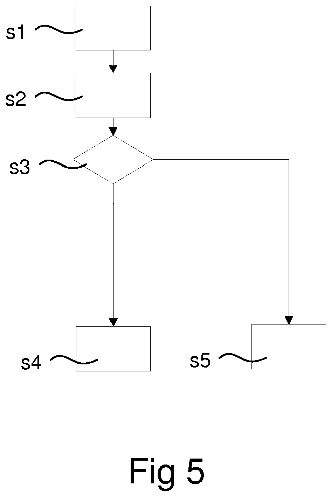

The description will now be directed to the operation of the system 1 with reference to Fig. 5.

The controller 11, 12, 13, 14 may be configured to transmit a first data packet comprising data entry ID and data entry version identifier of one or more, preferably all, data entries in the data storage unit, via the first interface 103, to other controllers, step s1. This transmission may be performed on a regular basis, as a heartbeat signal.

The controller 11, 12, 13, 14 may be configured to receive one or more second data packets transmitted by one, some or all of the other controllers, via the first interface 103, wherein the second data packet comprises data entry ID and data entry version identifier of a data entry of said one of the other controllers, step s2. Hence, each controller may transmit its own heartbeat signal as well as receive heartbeat signals from one or all of the other controllers.

The controller 11, 12, 13, 14 may be configured to compare the received data entry version identifier of the second data packet, with a data entry version identifier of a corresponding data entry in the data storage unit having a same data entry ID as the second data packet, step s3. Typically, such comparison may be performed for each received second data packet.

The controller is configured to update the data payload of the data entry in the data storage unit, e.g., upon receipt of the first signal for updating a data payload and update the data entry version identifier of the updated data entry to indicate a newer version.

When the data entry version identifier of the second data packet is indicated as older than the data entry version identifier of the corresponding data entry in the data storage unit in step s3, the controller may be configured to transmit the first synchronizing data packet comprising the data entry ID, the data entry version identifier, and at least a portion, preferably all, of the data payload, of the corresponding data entry in the data storage unit, wherein a size of the first synchronizing data packet is greater than a size of the first data packet, step s4.

Hence, when the controller receives a data packet comprising an older data entry compared with the corresponding data entry in the controller's data storage unit, the controller sends out the most current corresponding data entry until all the controllers have updated in respect of the very data entry.

When the data entry version identifier of the second data packet is indicated as newer than the data entry version identifier of the corresponding data entry in the data storage unit, and when the second data packet comprises a portion of a data payload associated to the same data entry ID as the corresponding data entry in the data storage unit, the controller may be configured to update the data payload and the data entry version identifier of the corresponding data entry in the data storage unit, according to the portion of the data payload and the data entry version identifier of the second data packet, step s5.

If, on the other hand, the data entry version identifier of the second data packet is the same as that of the corresponding data entry in the storage unit, no synchronization operation needs to be carried out.

The data synchronization between a plurality of conveyor system controllers 11, 12, 13, 14 of a conveyor system 1 will be described in the following example involving two controllers 11, 12.

The first controller 11 may have a data entry A-11 stored in its data storage unit. The data entry A-11 may have a data entry ID 100, a data entry version identifier 1, and a data payload comprising information of an operating status of the first controller 11.

The second controller 12 may have a data entry A-12 stored in its data storage unit. The data entry A-12 may be a copy of the data entry A-11. Consequently, the data entry A-12 may also have the data entry ID 100, the data entry version identifier 1, and the data payload comprising information of the operating status of the first controller 11, as the data entry A-11.

The first controller 11 may receive a signal from an external sensor indicating arrival of a work piece carrier to a portion of the conveyor system associated with the first controller 11.

On receipt of the signal, the processing unit 102 of the controller 11 may cause an update of the data payload of data entry A-11. Thus, in the updated data entry A'-11, the updated data payload may indicate the arrival of the work piece carrier detected by the external sensor. In consequence, the controller 11 may update the data entry version identifier of the updated data entry A'-11 to indicate a newer version. For example, the data entry version identifier of A'-11 may be updated from 1 to 2.

That is, the change in data payload for a data entry may trigger the sending of the synchronization data packet.

Alternatively, it is possible to trigger sending of the data synchronization packet in response to a first controller discovering that received heartbeat data packets have an older data entry version identifier.

The second controller 12 may transmit a second data packet comprising data entry ID 100 and data entry version identifier 1 of the data entry A-12, to the first controller 11.

The first controller 11 may receive the second data packet transmitted by the second controller 12. Since the received data entry ID is 100, the first controller 11 may compare the received data entry version identifier 1 of the received second data packet, with the data entry version identifier 2 of the corresponding data entry A'-11 in its data storage unit, which has the same data entry ID 100.

After comparing, it is concluded that the data entry version identifier 1 of the second data packet is indicated as older than the data entry version identifier 2 of the corresponding data entry A'-11. That is, the data entry A-12 of the second controller 12, which corresponds to data entry A-11, is not as updated as the updated data entry A'-11 of the first controller 11.

On detection of an older version of the data entry A-12 of the received second data packet, the first controller 11 may transmit a first synchronizing data packet comprising the data entry ID 100, the data entry version identifier 2, and at least a portion of the data payload indicating the arrival of the work piece carrier, of the updated data entry A'-11.

As comprising the additional data payload for updating, the size of the first synchronizing data packet may be greater than a size of the data packet it sent previously.

The second controller 12 may receive the first synchronizing data packet transmitted by the first controller 11. The first synchronizing data packet may comprise data entry ID 100, data entry version identifier 2 and the part of the data payload indicating the arrival of the work piece carrier, of the updated data entry A'-11 of the first controller 11.

Since the data entry ID of the received first synchronizing data packet is 100, the second controller 12 may compare the received data entry version identifier 2 of the first synchronizing data packet, with the data entry version identifier 1 of the corresponding data entry A-12 in its data storage unit, which has the same data entry ID 100.

After comparing, it is concluded that the data entry version identifier 2 of the first synchronizing data packet is indicated as newer than the data entry version identifier 1 of the corresponding data entry A-12. That is, the data entry A-12 stored in the second controller 12, being a copy of data entry A-11, is not as updated as the updated data entry A'-11 stored in the first controller 11.

Upon detection of a newer version of the data entry A'-11 of the controller 11, and that the first synchronizing data packet comprises a portion of a data payload belonging to the corresponding data entry A'-11 in the data storage unit of the controller 11, the second controller 12 may update the data payload and the data entry version identifier 1 of the data entry A-12, according to the received first synchronizing data packet.

The updated data entry A'-12 may have a data entry ID 100, an updated data entry version identifier 2, and the updated data payload indicating the arrival of the work piece carrier as that of the data entry A'-11. That is, the updated data entry A'-12 stored in the second controller 12 is updated as a copy of the updated data entry A'-11 of the first controller 11.

The second controller 12 will continue to send out second data packets indicating the old data entry version until the data entry has been updated. After the data entry has been updated, the controller 12 will update also the data entry version identifier.

In the event more than one data synchronization packets need to be transmitted, then the second controller may defer updating its data entry version identifier until all data synchronization packets have been received and the corresponding data payload has been received in its entirety.

Optionally, the controller 12 may send a first notification to the controller 11 to inform the controller 11 that the first synchronizing data packet is received completely, stored completely, and/or the update is successfully. The first notification may be a data packet comprising the data entry ID 100 and the updated data entry version identifier 2 of the updated data entry A'-12.

Optionally, the second controller 12 may send a second notification comprising the data entry version identifier 1 and the data entry ID 100 of the data entry A-12 to the first controller 11, until the first synchronizing data packet is received completely, stored completely, and/or the update is successfully. The second notification may be used to inform the first controller 11 that the first synchronizing data packet has not been completely received, not been completely stored, and/or the update is not completed yet.

Other controllers 13, 14 in the system 1 may each comprise a data entry A-13 and A-14, respectively, as a copy of the data entry A-11 of the controller 11. The other controllers 13, 14 may also perform the same synchronization as the controllers 11, 12, such that the updated data entry version identifier for the updated data entries A'-13 and A'-14 may also be updated to 2, as the updated data entry A'-12. Afterwards, the first controller 11 may not receive data packet from the second controller 12 and the other controllers 13, 14 in which the data entry version identifier for the data entry having data entry ID 100 is indicated as older than the data entry version identifier 2.

The first controller 11 may transmit a second synchronizing data packet comprising the data entry ID 100, the data entry version identifier 2, of the data entry A'-11 in its data storage unit. The size of the second synchronizing data packet may be less than the size of the first synchronizing data packet.

That is, after all the controllers 12, 13, 14 in the system are synchronized to the updated data entry A'-11, it is not necessary for the controller 11 to continue transmitting the first synchronizing data packet comprising any data payload. The first controller 11 may start transmitting data packet with a smaller size comprising only the data entry ID 100 and the data entry version identifier 2 of the updated data entry A'-11, or comprising the data entry ID 100, the data entry version identifier 2, and a small portion of the data payload, of the updated data entry A'-11.

When a new controller needs to be installed in the system 1 comprising a plurality of the present conveyor system controllers 11, 12, 13, 14, the new controller may be configured to comprise data entries having an old data entry version identifier, e.g., "0". Thus, the new controller may be automatically synchronized to the other existing controllers 11, 12, 13, 14 by the synchronization triggered by those controllers having "newer" data entries. Thus, the installation of a new controller in the system may be facilitated.

When the controller 11 needs to be reconfigured, the controller may be automatically synchronized to the other controllers by the synchronization triggered by those controllers having "newer" data entries, without any human intervention. Thus, the reconfiguration of the existing controllers may be facilitated.

In the data entry structures disclosed in figs 4a-4c, an additional field may be included, which may be used to indicate whether the controller needs this data entry or not. Based on such a field, it is possible for controllers to ignore all data packets relating to data entries that are not needed.

A plurality of controllers as disclosed herein may be connected to form a network. Such a network may further comprise a flow configurator, i.e. a device that is used to determine the functions of each controller. Such determination may be made based on input from a user interface or based on a configuration plan that has been received. The flow configurator may communicate in the same manner as described above with regard to the controllers, with the difference that its payload may be manipulated through the user interface or through the configuration plan.

Hence, configuring the controllers may be achieved by updating some or all of the flow configurator's data entries. Hence, the flow configurator will begin to send out updated data entries as soon as it starts receiving messages from other controllers indicating that they have older data entries.

Moreover, a controller may be introduced by assigning to it a certain function, such that it will know what data it needs to receive and store, and its data entries may be reset to a very low data entry version indicator value, such as 0 or 1, whereby, when it is introduced into an existing network, and begin to send out the first heartbeat data packets, other controllers will recognize that there is a controller with an older data version, and thus begin to send out synchronization data packets to allow the new controller to update its data entries.

## Claims

1. A conveyor system controller (11, 12, 13, 14), comprising:
a data storage unit (101) configured to store a plurality of data entries, each data entry comprising a data entry ID, a data entry version identifier, and a data payload representing operating information of the controller or another controller;
a processing unit (102); and
a first interface (103) for communicating with said another controller;
**characterised in that**
the controller is configured to
transmit a first heartbeat data packet comprising data entry ID and data entry version identifier of a data entry in the data storage unit, via the first interface (103), to other controllers;
receive a second heartbeat data packet transmitted by said another controller, via the first interface (103), the second heartbeat data packet comprising data entry ID and data entry version identifier of a data entry of said another controller; and
compare the received data entry version identifier of the second heartbeat data packet, with a data entry version identifier of a corresponding data entry in the data storage unit having a same data entry ID as the second heartbeat data packet;
wherein, when the controller determines that the data entry stored in its storage unit is newer than the corresponding data entry in the other controller, the controller is configured to transmit to the other controller a first synchronizing data packet comprising the data entry ID, the data entry version identifier, and at least a portion of the data payload, of the corresponding data entry in the data storage unit;
wherein a size of the first synchronizing data packet is greater than a size of the first heartbeat data packet;
the controller (11, 12, 13, 14) is further configured to receive a second synchronizing data packet comprising a second data entry ID, a second data entry version identifier, and at least a portion of a second data payload, of a second data entry in the other controller's data storage unit,
wherein a size of the second synchronizing data packet is greater than a size of the second heartbeat data packet,
wherein, when the second data entry version identifier of the second synchronizing data packet is indicated as newer than a data entry version identifier of a corresponding data entry in the data storage unit, the controller (11, 12, 13, 14) is configured to update the data payload and the data entry version identifier of the corresponding data entry in the data storage unit, according to the portion of the second data payload and the second data entry version identifier of the second synchronizing data packet;
wherein the controller (11, 12, 13, 14) further comprises a second interface (104) for communicating with an external unit (15,16);
wherein the controller (11, 12, 13, 14) is further configured to:
receive a first signal from the external unit (15,16), via the second interface (104), for updating a data payload of a data entry in the data storage unit;
update the data payload of the data entry in the data storage unit according to the first signal; and
update the data entry version identifier of the updated data entry to indicate a newer version.

2. The conveyor system controller (11, 12, 13, 14) as claimed in claim 1, wherein the controller (11, 12, 13, 14) is configured to determine that the data entry stored in its storage unit is newer than the corresponding data entry in said another controller based on a change in its data payload and/or a change in its data version identifier.

3. The conveyor system controller (11, 12, 13, 14) as claimed in claim 1, wherein the controller (11, 12, 13, 14) is configured to determine that the data entry stored in its storage unit is newer than the corresponding data entry in said another controller based on that the data entry version identifier of the second heartbeat data packet is indicated as older than the data entry version identifier of the corresponding data entry in the data storage unit.

4. The conveyor system controller (11, 12, 13, 14) as claimed in any one of the preceding claims,
wherein the controller (11, 12, 13, 14) is configured such that the first synchronization data packet comprises a portion of the data payload, said portion being a subset of the data payload,
wherein the first synchronization data packet further comprises an indication of total data payload size for the data entry and/or a data payload portion order indicator.

5. The conveyor system controller (11, 12, 13, 14) as claimed in any one of the preceding claims, wherein the controller is configured to transmit the first heartbeat data packet only for data entries that meet a predetermined criterion, such as a data entry ID or a data entry ID range.

6. The conveyor system controller (11, 12, 13, 14) as claimed in any one of the preceding claims, wherein the controller is configured to receive said heartbeat second data packet only if the data entry ID of the second heartbeat data packet meets a predetermined criterion, such as a data entry ID or data entry ID range.

7. The conveyor system controller (11, 12, 13, 14) as claimed in any one of the preceding claims, wherein the controller (11, 12, 13, 14) is further configured to:
provide a second signal to the external unit (15,16), via the second interface (104), for controlling the external unit (15,16).

8. The conveyor system controller (11, 12, 13, 14) as claimed in any one of the preceding claims, wherein the data entry version identifier comprises a counter or a time stamp.

9. The conveyor system controller (11, 12, 13, 14) as claimed in any one of the preceding claims, wherein the operating information comprises an operating mode, such as a controller configuration, and/or an operating status, such as a sensor state or an error state.

10. A method of data synchronization between a plurality of conveyor system controllers (11, 12, 13, 14) of a conveyor system (1),
wherein each conveyor system controller (11, 12, 13, 14) comprises:
a data storage unit (101) configured to store a plurality of data entries, each data entry comprising a data entry ID, a data entry version identifier, and a data payload representing operating information of the controller or another controller;
a processing unit (102); and
a first interface (103) for communicating with said another controller;
**characterised in that** the method comprises, in each controller:
transmitting a first heartbeat data packet comprising data entry ID and data entry version identifier of a data entry in the data storage unit, via the first interface, to other controllers (s1);
receiving a second heartbeat data packet transmitted by said another controller, via the first interface, the second data packet comprising data entry ID and data entry version identifier of a data entry of said another controller (s2); and
comparing the received data entry version identifier of the second heartbeat data packet, with a data entry version identifier of a corresponding data entry in the data storage unit having a same data entry ID as the second heartbeat data packet (s3);
wherein, when the controller determines that the data entry stored in its storage unit is newer than the corresponding data entry in the other controller, the method comprises:
transmitting to the other controller a first synchronizing data packet comprising the data entry ID, the data entry version identifier, and at least a portion of the data payload, of the corresponding data entry in the data storage unit (s4);
wherein a size of the first synchronizing data packet is greater than a size of the first heartbeat data packet;
receiving a second synchronizing data packet comprising a second data entry ID, a second data entry version identifier, and at least a portion of a second data payload, of a second data entry in the other controller's data storage unit,
wherein a size of the second synchronizing data packet is greater than a size of the second data packet, and
when the second data entry version identifier of the second synchronizing data packet is indicated as newer than a data entry version identifier of a corresponding data entry in the data storage unit (101), the method further comprises updating the data payload and the data entry version identifier of the corresponding data entry in the data storage unit (101), according to the portion of the second data payload and the second data entry version identifier of the second synchronizing data packet;
wherein each controller (11, 12, 13, 14) further comprises a second interface (104) for communicating with an external unit (15,16);
wherein the method comprises, in each controller:
receiving a first signal from the external unit (15,16), via the second interface (104), for updating a data payload of a data entry in the data storage unit;
updating the data payload of the data entry in the data storage unit according to the first signal; and
updating the data entry version identifier of the updated data entry to indicate a newer version.

## Patentansprüche

1. Fördersystemsteuergerät (11, 12, 13, 14), umfassend:
eine Datenspeichereinheit (101), die ausgelegt ist, um eine Vielzahl von Dateneinträgen zu speichern, wobei jeder Dateneintrag eine Dateneintrag-ID, eine Dateneintrag-Versionskennung und eine Datennutzlast, die Betriebsinformationen des Steuergeräts oder eines anderen Steuergeräts darstellen, umfasst;
eine Verarbeitungseinheit (102); und
eine erste Schnittstelle (103) zum Kommunizieren mit dem anderen Steuergerät;
**dadurch gekennzeichnet, dass**
das Steuergerät ausgelegt ist, um
ein erstes Heartbeat-Datenpaket, das die Dateneintrag-ID und die Dateneintrag-Versionskennung eines Dateneintrags in der Datenspeichereinheit umfasst, über die erste Schnittstelle (103) zu anderen Steuergeräten zu übertragen;
ein durch das andere Steuergerät übertragenes zweites Heartbeat-Datenpaket über die erste Schnittstelle (103) zu empfangen, wobei das zweite Heartbeat-Datenpaket die Dateneintrag-ID und die Dateneintrag-Versionskennung eines Dateneintrags des anderen Steuergeräts umfasst; und
die empfangene Dateneintrag-Versionskennung des zweiten Heartbeat-Datenpakets mit einer Dateneintrag-Versionskennung eines entsprechenden Dateneintrags in der Datenspeichereinheit, die eine gleiche Dateneintrag-ID wie das zweite Heartbeat-Datenpaket aufweist, zu vergleichen;
wobei, wenn das Steuergerät bestimmt, dass der in seiner Speichereinheit gespeicherte Dateneintrag neuer als der entsprechende Dateneintrag in dem anderen Steuergerät ist, das Steuergerät ausgelegt ist, um ein erstes Synchronisation-Datenpaket, das die Dateneintrag-ID, die Dateneintrag-Versionskennung und mindestens einen Teil der Datennutzlast des entsprechenden Dateneintrags in der Datenspeichereinheit umfasst, zu dem anderen Steuergerät zu übertragen;
wobei eine Größe des ersten Synchronisation-Datenpakets größer ist als eine Größe des ersten Heartbeat-Datenpakets;
das Steuergerät (11, 12, 13, 14) ferner ausgelegt ist, um ein zweites Synchronisation-Datenpaket, das eine zweite Dateneintrag-ID, eine zweite Dateneintrag-Versionskennung und mindestens einen Teil einer zweiten Datennutzlast eines zweiten Dateneintrags in der Datenspeichereinheit des anderen Steuergeräts umfasst, zu empfangen,
wobei eine Größe des zweiten Synchronisation-Datenpakets größer ist als eine Größe des zweiten Heartbeat-Datenpakets,
wobei, wenn die zweite Dateneintrag-Versionskennung des zweiten Synchronisation-Datenpakets als neuer als eine Dateneintrag-Versionskennung eines entsprechenden Dateneintrags in der Datenspeichereinheit angegeben ist, das Steuergerät (11, 12, 13, 14) ausgelegt ist, um die Datennutzlast und die Dateneintrag-Versionskennung des entsprechenden Dateneintrags in der Datenspeichereinheit gemäß dem Teil der zweiten Datennutzlast und der zweiten Dateneintrag-Versionskennung des zweiten Synchronisation-Datenpakets zu aktualisieren;
wobei das Steuergerät (11, 12, 13, 14) ferner eine zweite Schnittstelle (104) zum Kommunizieren mit einer externen Einheit (15, 16) umfasst;
wobei das Steuergerät (11, 12, 13, 14) ferner ausgelegt ist, um:
ein erstes Signal zum Aktualisieren einer Datennutzlast eines Dateneintrags in der Datenspeichereinheit von der externen Einheit (15, 16) über die zweite Schnittstelle (104) zu empfangen;
die Datennutzlast des Dateneintrags in der Datenspeichereinheit gemäß dem ersten Signal zu aktualisieren; und
die Dateneintrag-Versionskennung des aktualisierten Dateneintrags zu aktualisieren, um eine neuere Version anzugeben.

2. Fördersystemsteuergerät (11, 12, 13, 14) nach Anspruch 1, wobei das Steuergerät (11, 12, 13, 14) ausgelegt ist, um zu bestimmen, dass der in seiner Speichereinheit gespeicherte Dateneintrag neuer ist als der entsprechende Dateneintrag in dem anderen Steuergerät basierend auf einer Änderung seiner Datennutzlast und/oder einer Änderung seiner Datenversionskennung.

3. Fördersystemsteuergerät (11, 12, 13, 14) nach Anspruch 1, wobei das Steuergerät (11, 12, 13, 14) ausgelegt ist, um zu bestimmen, dass der in der Speichereinheit gespeicherte Dateneintrag neuer ist als der entsprechende Dateneintrag in dem anderen Steuergerät basierend darauf, dass die Dateneintrag-Versionskennung des zweiten Heartbeat-Datenpakets als älter als die Dateneintrag-Versionskennung des entsprechenden Dateneintrags in der Datenspeichereinheit angegeben ist.

4. Fördersystemsteuergerät (11, 12, 13, 14) nach einem der vorhergehenden Ansprüche,
wobei das Steuergerät (11, 12, 13, 14) derart ausgelegt ist, dass das erste Synchronisation-Datenpaket einen Teil der Datennutzlast umfasst, wobei der Teil eine Teilmenge der Datennutzlast ist,
wobei das erste Synchronisation-Datenpaket ferner eine Angabe der Gesamtgröße der Datennutzlast für den Dateneintrag und/oder einen Datennutzlastteil-Reihenfolgeanzeiger umfasst.

5. Fördersystemsteuergerät (11, 12, 13, 14) nach einem der vorhergehenden Ansprüche, wobei das Steuergerät ausgelegt ist, um das erste Heartbeat-Datenpaket nur für Dateneinträge zu übertragen, die ein vorgegebenes Kriterium, wie etwa eine Dateneintrag-ID oder einen Dateneintrag-ID-Bereich, erfüllen.

6. Fördersystemsteuergerät (11, 12, 13, 14) nach einem der vorhergehenden Ansprüche, wobei das Steuergerät ausgelegt ist, um das zweite Heartbeat-Datenpaket nur zu empfangen, wenn die Dateneintrag-ID des zweiten Heartbeat-Datenpakets ein vorgegebenes Kriterium, wie etwa eine Dateneintrag-ID oder einen Dateneintrag-ID-Bereich, erfüllt.

7. Fördersystemsteuergerät (11, 12, 13, 14) nach einem der vorhergehenden Ansprüche, wobei das Steuergerät (11, 12, 13, 14) ferner ausgelegt ist, um
der externen Einheit (15, 16) ein zweites Signal zum Steuern der externen Einheit (15, 16) über die zweite Schnittstelle (104) bereitzustellen.

8. Fördersystemsteuergerät (11, 12, 13, 14) nach einem der vorhergehenden Ansprüche, wobei die Dateneintrag-Versionskennung einen Zähler oder einen Zeitstempel umfasst.

9. Fördersystemsteuergerät (11, 12, 13, 14) nach einem der vorhergehenden Ansprüche, wobei die Betriebsinformationen einen Betriebsmodus, wie etwa eine Steuerungskonfiguration, und/oder einen Betriebsstatus, wie etwa einen Sensorstatus oder einen Fehlerstatus, umfassen.

10. Verfahren zur Datensynchronisation zwischen einer Vielzahl von Fördersystemsteuergeräten (11, 12, 13, 14) eines Fördersystems (1),
wobei jedes Fördersystemsteuergerät (11, 12, 13, 14) Folgendes umfasst:
eine Datenspeichereinheit (101), die ausgelegt ist, um eine Vielzahl von Dateneinträgen zu speichern, wobei jeder Dateneintrag eine Dateneintrag-ID, eine Dateneintrag-Versionskennung und eine Datennutzlast, die Betriebsinformationen des Steuergeräts oder eines anderen Steuergeräts darstellen, umfasst;
eine Verarbeitungseinheit (102); und
eine erste Schnittstelle (103) zum Kommunizieren mit dem anderen Steuergerät;
**dadurch gekennzeichnet, dass** das Verfahren in jedem Steuergerät Folgendes umfasst:
Übertragen eines ersten Heartbeat-Datenpakets, das die Dateneintrag-ID und die Dateneintrag-Versionskennung eines Dateneintrags in der Datenspeichereinheit umfasst, über die erste Schnittstelle an andere Steuergeräte (s1);
Empfangen eines über das andere Steuergerät übertragenen zweiten Heartbeat-Datenpakets über die erste Schnittstelle, wobei das zweite Datenpaket die Dateneintrag-ID und die Dateneintrag-Versionskennung eines Dateneintrags des anderen Steuergeräts umfasst (s2); und
Vergleichen der empfangenen Dateneintrag-Versionskennung des zweiten Heartbeat-Datenpakets mit einer Dateneintrag-Versionskennung eines entsprechenden Dateneintrags in der Datenspeichereinheit, die eine gleiche Dateneintrag-ID wie das zweite Heartbeat-Datenpaket aufweist, (s3);
wobei das Verfahren Folgendes umfasst, wenn das Steuergerät bestimmt, dass der in seiner Speichereinheit gespeicherte Dateneintrag neuer ist als der entsprechende Dateneintrag in dem anderen Steuergerät:
Übertragen eines ersten Synchronisation-Datenpakets, das die Dateneintrag-ID, die Dateneintrag-Versionskennung und mindestens einen Teil der Datennutzlast des entsprechenden Dateneintrags in der Datenspeichereinheit umfasst, an das andere Steuergerät (s4);
wobei eine Größe des ersten Synchronisation-Datenpakets größer ist als eine Größe des ersten Heartbeat-Datenpakets;
Empfangen eines zweiten Synchronisation-Datenpakets, das eine zweite Dateneintrag-ID, eine zweite Dateneintrag-Versionskennung und mindestens einen Teil einer zweiten Datennutzlast eines zweiten Dateneintrags in der Datenspeichereinheit des anderen Steuergeräts umfasst,
wobei eine Größe des zweiten Synchronisation-Datenpakets größer ist als eine Größe des zweiten Datenpakets, und
wenn die zweite Dateneintrag-Versionskennung des zweiten Synchronisation-Datenpakets als neuer als eine Dateneintrag-Versionskennung eines entsprechenden Dateneintrags in der Datenspeichereinheit (101) angegeben ist, das Verfahren ferner das Aktualisieren der Datennutzlast und der Dateneintrag-Versionskennung des entsprechenden Dateneintrags in der Datenspeichereinheit (101) gemäß dem Teil der zweiten Datennutzlast und
der zweiten Dateneintrag-Versionskennung des zweiten Synchronisation-Datenpakets umfasst;
wobei jedes Steuergerät (11, 12, 13, 14) ferner eine zweite Schnittstelle (104) zum Kommunizieren mit einer externen Einheit (15, 16) umfasst;
wobei das Verfahren in jedem Steuergerät Folgendes umfasst:
Empfangen eines ersten Signals zum Aktualisieren einer Datennutzlast eines Dateneintrags in der Datenspeichereinheit von der externen Einheit (15, 16) über die zweite Schnittstelle (104);
Aktualisieren der Datennutzlast des Dateneintrags in der Datenspeichereinheit gemäß dem ersten Signal; und
Aktualisieren der Dateneintrag-Versionskennung des aktualisierten Dateneintrags, um eine neuere Version anzugeben.

## Revendications

1. Contrôleur de système de convoyeur (11, 12, 13, 14), comprenant:
une unité de mémorisation de données (101) configurée pour stocker une pluralité d'entrées de données, chaque entrée de données comprenant un ID d'entrée de données, un identifiant de version d'entrée de données et une charge utile de données représentant des informations de fonctionnement du contrôleur ou d'un autre contrôleur;
une unité de traitement (102); et
une première interface (103) pour communiquer avec ledit autre contrôleur;
**caractérisé en ce que** le contrôleur est configuré pour transmettre un premier paquet de données de pulsation comprenant un ID d'entrée de données et un identifiant de version d'entrée de données d'une entrée de données dans l'unité de mémorisation de données, via la première interface (103), à d'autres contrôleurs;
recevoir un deuxième paquet de données de pulsation transmis par ledit autre contrôleur, via la première interface (103), le deuxième paquet de données de pulsation comprenant un ID d'entrée de données et un identifiant de version d'entrée de données d'une entrée de données dudit autre contrôleur; et
comparer l'identifiant de version d'entrée de données reçu du second paquet de données de pulsation, avec un identifiant de version d'entrée de données d'une entrée de données correspondante dans l'unité de mémorisation de données ayant le même ID d'entrée de données que le deuxième paquet de données de pulsation;
dans lequel, lorsque le contrôleur détermine que l'entrée de données stockée dans son unité de stockage est plus récente que l'entrée de données correspondante dans l'autre contrôleur,
le contrôleur est configuré pour transmettre à l'autre contrôleur un premier paquet de données de synchronisation comprenant l'ID d'entrée de données, l'identifiant de version d'entrée de données, et au moins une partie de la charge utile de données, de l'entrée de données correspondante dans l'unité de mémorisation de données;
dans lequel une taille du premier paquet de données de synchronisation est supérieure à une taille du premier paquet de données de pulsation;
le contrôleur (11, 12, 13, 14) est en outre configuré pour recevoir un deuxième paquet de données de synchronisation comprenant un deuxième ID d'entrée de données, un deuxième identifiant de version d'entrée de données et au moins une partie d'une seconde charge utile de données, d'un deuxième saisie de données dans l'unité de mémorisation de données de l'autre contrôleur,
dans lequel une taille du deuxième paquet de données de synchronisation est supérieure à une taille du deuxième paquet de données de pulsation,
dans lequel, lorsque le deuxième identifiant de version d'entrée de données du deuxième paquet de données de synchronisation est indiqué comme plus récent qu'un identifiant de version d'entrée de données d'une entrée de données correspondante dans l'unité de mémorisation de données, le contrôleur (11, 12, 13, 14) est configuré pour mettre à jour la charge utile des données et l'identifiant de version de l'entrée de données correspondante dans l'unité de mémorisation de données, selon la partie de la deuxième charge utile de données et le deuxième identifiant de version d'entrée de données du deuxième paquet de données de synchronisation;
dans lequel le contrôleur (11, 12, 13, 14) comprend en outre une seconde interface (104) pour communiquer avec une unité externe (15,16);
dans lequel le contrôleur (11, 12, 13, 14) est en outre configuré pour:
recevoir un premier signal de l'unité externe (15, 16), via la seconde interface (104), pour mettre à jour une charge utile de données d'une entrée de données dans l'unité de mémorisation de données;
mettre à jour la charge utile de données de l'entrée de données dans l'unité de mémorisation de données selon le premier signal; et
mettre à jour l'identifiant de version d'entrée de données de l'entrée de données mise à jour pour indiquer une version plus récente.

2. Contrôleur du système de convoyeur (11, 12, 13, 14) selon la revendication 1, dans laquelle le contrôleur (11, 12, 13, 14) est configuré pour déterminer que l'entrée de données stockée dans son unité de stockage est plus récente que l'entrée de données correspondante dans ledit autre contrôleur sur la base d'un changement de sa charge utile de données et/ou un changement de son identifiant de version de données.

3. Contrôleur de système de convoyeur (11, 12, 13, 14) selon la revendication 1, dans lequel le contrôleur (11, 12, 13, 14) est configuré pour déterminer que l'entrée de données stockée dans son unité de stockage est plus récente que l'entrée de données correspondante dans ledit autre contrôleur sur la base du fait que l'identifiant de version d'entrée de données du deuxième paquet de données de pulsation est indiqué comme étant plus ancien que l'identifiant de version d'entrée de données de l'entrée de données correspondante dans l'unité de mémorisation de données.

4. Contrôleur de système de convoyeur (11, 12, 13, 14) selon une quelconque des revendications précédentes, dans lequel le contrôleur (11, 12, 13, 14) est configuré de telle sorte que le premier paquet de données de synchronisation comprenne une partie de la charge utile de données, ladite partie étant un sous-ensemble de la charge utile de données,
dans lequel le premier paquet de données de synchronisation comprend en outre une indication de la taille totale de la charge utile de données pour l'entrée de données et / ou un indicateur d'ordre de portion de données utiles.

5. Contrôleur de système de convoyeur (11, 12, 13, 14) selon une quelconque des revendications précédentes, dans lequel le contrôleur est configuré pour transmettre le premier paquet de données de pulsation uniquement pour des entrées de données qui répondent à un critère prédéterminé, tel qu'un ID d'entrée de données ou une plage d'ID d'entrée de données.

6. Contrôleur de système de convoyeur (11, 12, 13, 14) selon une quelconque des revendications précédentes, dans lequel le contrôleur est configuré pour recevoir ledit deuxième paquet de données de pulsation uniquement si l'ID d'entrée de données du deuxième paquet de données de pulsation répond à un critère prédéterminé, tel qu'un ID d'entrée de données ou une plage d'ID d'entrée de données.

7. Contrôleur de système de convoyeur (11, 12, 13, 14) selon une quelconque des revendications précédentes, dans lequel le contrôleur (11, 12, 13, 14) est en outre configuré pour:
fournir un deuxième signal à l'unité externe (15,16), via la seconde interface (104), pour commander l'unité externe (15,16).

8. Contrôleur de système de convoyeur (11, 12, 13, 14) selon une quelconque des revendications précédentes, dans lequel l'identifiant de version d'entrée de données comprend un compteur ou un pointeur temporel.

9. Contrôleur de système de convoyeur (11, 12, 13, 14) selon une quelconque des revendications précédentes, dans lequel les informations de fonctionnement comprennent un mode de fonctionnement, tel qu'une configuration de contrôleur, et/ou un état de fonctionnement, comme un état de capteur ou un état d'erreur.

10. Procédé de synchronisation de données entre une pluralité de contrôleurs de système de convoyeur (11, 12, 13, 14) d'un système de convoyeur (1), dans lequel chaque contrôleur de système de convoyeur (11, 12, 13, 14) comprend:
une unité de mémorisation de données (101) configurée pour stocker une pluralité d'entrées de données, chaque entrée de données comprenant un ID d'entrée de données, un identifiant de version d'entrée de données, et
une charge utile de données représentant des informations de fonctionnement du contrôleur ou d'un autre contrôleur;
une unité de traitement (102); et
une première interface (103) pour communiquer avec ledit autre contrôleur;
**caractérisé en ce que** le procédé comprend, dans chaque contrôleur de:
transmettre un premier paquet de données de pulsation comprenant un ID d'entrée de données et un identifiant de version d'entrée de données d'une entrée de données dans l'unité de mémorisation de données, via la première interface, à d'autres contrôleurs (s1);
recevoir un deuxième paquet de données de pulsation transmis par ledit autre contrôleur, via la première interface, le deuxième paquet de données comprenant un ID d'entrée de données et un identifiant de version d'entrée de données d'une entrée de données dudit autre contrôleur (s2); et
comparer l'identifiant de version d'entrée de données reçu du second paquet de données de pulsation, avec un identifiant de version d'entrée de données d'une entrée de données correspondante dans l'unité de mémorisation de données ayant le même ID d'entrée de données que le deuxième paquet de données de pulsation (s3);
dans lequel, lorsque le contrôleur détermine que l'entrée de données stockée dans son unité de stockage est plus récente que l'entrée de données correspondante dans l'autre contrôleur, le procédé comprend de:
transmettre à l'autre contrôleur un premier paquet de données de synchronisation comprenant l'ID d'entrée de données, l'identifiant de version d'entrée de données, et au moins une partie de la charge utile de données,
de l'entrée de données correspondante dans l'unité de mémorisation de données (s4); dans lequel une taille du premier paquet de données de synchronisation est supérieure à une taille du premier paquet de données de pulsation;
recevoir un deuxième paquet de données de synchronisation comprenant un deuxième ID d'entrée de données, un deuxième identifiant de version d'entrée de données, et au moins une partie d'une seconde charge utile de données, d'une deuxième entrée de données dans l'unité de mémorisation de données de l'autre contrôleur,
dans lequel une taille du deuxième paquet de données de synchronisation est supérieure à une taille du deuxième paquet de données, et lorsque le deuxième identifiant de version d'entrée de données du deuxième paquet de données de synchronisation est indiqué comme plus récent qu'un identifiant de version d'entrée de données d'une entrée de données correspondante dans l'unité de mémorisation de données (101), le procédé comprend en outre la mise à jour de la charge utile de données et l'identifiant de version d'entrée de données de l'entrée de données correspondante dans l'unité de mémorisation de données (101) selon la partie de la seconde charge utile de données et le deuxième identifiant de version d'entrée de données du deuxième paquet de données de synchronisation;
dans lequel chaque contrôleur (11, 12, 13, 14) comprend en outre une seconde interface (104) pour communiquer avec une unité externe (15,16);
dans lequel le procédé comprend, dans chaque contrôleur de:
recevoir un premier signal de l'unité externe (15,16), via la deuxième interface (104), pour mettre à jour une charge utile de données d'une entrée de données dans l'unité de mémorisation de données;
mettre à jour de la charge utile de données de l'entrée de données dans l'unité de mémorisation de données selon le premier signal; et
mettre à jour l'identifiant de version d'entrée de données de l'entrée de données mise à jour pour indiquer une version plus récente.
